# EUROPÄISCHE PATENTANMELDUNG

(11) **EP 4 497 664 A1**
(43) Veröffentlichungstag der Anmeldung: **29.01.2025**
(21) Anmeldenummer: 24177007.2
(22) Anmeldetag: 21.05.2024
(51) Int. Cl.: B62D 55/112, B62D 55/10

(54) **RAUPENLAUFWERK FÜR EINE LANDWIRTSCHAFTLICHE ARBEITSMASCHINE SOWIE LANDWIRTSCHAFTLICHE ARBEITSMASCHINE**

(30) Priorität: 24.07.2023 DE 102023119484
(71) Anmelder: CLAAS Industrietechnik GmbH, 33106 Paderborn (DE)
(72) Erfinder: Wagemann, Sebastian, 59302 Oelde-Sünninghausen (DE)
(74) Vertreter: CLAAS 365FarmNet GmbH

(57) **Zusammenfassung**

Die vorliegende Anmeldung betrifft ein Raupenlaufwerk (1) für eine landwirtschaftliche Arbeitsmaschine (2), umfassend ein vorderes Hauptrad (3), ein hinteres Hauptrad (4), einen dem vorderen Hauptrad (3) zugeordneten vorderen Hauptrahmen (5), einen dem hinteren Hauptrad (4) zugeordneten hinteren Hauptrahmen (6), zwei Stützräder (9, 10), einen die Haupträder (3, 4) umspannenden Laufgurt (11) und eine Anlenkstelle (12), mittels der das Raupenlaufwerk (1) unter Ausbildung einer Maschinenachse (13) schwenkbeweglich mit einer Karosserie (42) der Arbeitsmaschine (2) verbindbar ist, wobei die beiden Hauptrahmen (5, 6) um eine gemeinsame Schwenkachse (14) schwenkbeweglich miteinander gekoppelt sind, wobei die Stützräder (9, 10) an einem gemeinsamen Stützrahmen (15) angeordnet sind, wobei der Stützrahmen (15) mittels einer Stützradschwinge (17) schwenkbeweglich mit dem vorderen Hauptrahmen (5) verbunden ist.

Um ein Raupenlaufwerk für eine landwirtschaftliche Arbeitsmaschine bereitzustellen, das gegenüber dem Stand der Technik einfacher konstruiert ist, wird erfindungsgemäß eine Dämpfungseinrichtung (43) vorgeschlagen, die mindestens eine Kolben-Zylinder-Einheit (18) und mindestens eine hydraulisch wirkende Druckeinrichtung (44, 45) umfasst, wobei die Kolben-Zylinder-Einheit (18) an einem Schwingenende (19) mit der Stützradschwinge (17) und an einem Rahmenende (20) mit dem hinteren Hauptrahmen (6) gekoppelt ist und hierdurch die Stützradschwinge (17) und den hinteren Hauptrahmen (6) miteinander koppelt.

## Beschreibung

Die vorliegende Anmeldung betrifft ein Raupenlaufwerk für eine landwirtschaftliche Arbeitsmaschine gemäß dem Oberbegriff von Anspruch 1. Ferner betrifft die vorliegende Anmeldung eine landwirtschaftliche Arbeitsmaschine gemäß dem Oberbegriff von Anspruch 14.

Das Raupenlaufwerk umfasst ein vorderes Hauptrad sowie ein hinteres Hauptrad. Diese Haupträder werden in der Technik auch als sogenannte "Idler Wheels" bezeichnet. Typischerweise ist eines der Haupträder, in aller Regel das hintere, drehantreibbar, während das andere Hauptrad passiv zur Führung eines die Haupträder umspannenden Laufgurts dient. Letzterer ist ebenfalls Teil des Raupenlaufwerks. Die Haupträder sind in Längsrichtung des Raupenlaufwerks betrachtet einander gegenüberliegend bzw. hintereinander angeordnet. Hierbei sind das vordere Hauptrad einem vorderen Hauptrahmen und das hintere Hauptrad einem hinteren Hauptrahmen zugeordnet. Diese Zuordnung kann insbesondere darin bestehen, dass die Haupträder mittelbar oder unmittelbar an ihrem jeweiligen Hauptrahmen angeordnet sind und jeweils um eine Drehachse drehbeweglich gelagert sind.

Insbesondere kann das vordere Hauptrad unter Ausbildung seiner Drehachse an einem Schwenkarm gelagert sein, der an dem vorderen Hauptrahmen angeordnet ist. Der Schwenkarm ist hierbei und Ausbildung eines Drehgelenks an den Hauptrahmen angeschlossen, sodass der Schwenkarm relativ zu dem Hauptrahmen verschwenkbar ist. Da die Drehachse des Hauptrads in einem Abstand von dem Drehgelenk des Schwenkarms an letzterem angeordnet ist, geht eine Verschwenkung des Schwenkarms relativ zu dem vorderen Hauptrahmen mit einer Bewegung der Schwenkachse des vorderen Hauptrads auf einer Kreisbahn um das Drehgelenk einher. Diese Bewegung führt zu einer Veränderung eines Abstands zwischen der Drehachse des vorderen Hauptrades und der Drehachse des hinteren Hauptrads, wodurch eine Gurtspannung des Laufgurts verändert wird. In einer solchen Konstellation kann der Schwenkarm bevorzugt ferner mit einer Kolben-Zylinder-Einheit zusammenwirken, mittels der eine Schwenkbewegung des Schwenkarms erzeugt werden kann und somit die Gurtspannung des Laufgurts einstellbar ist. Eine solche Kolben-Zylinder-Einheit wird in der Technik als "Bandspannzylinder" bezeichnet. Eine solche mittelbare Anordnung der Drehachse des vorderen Hauptrades an dem vorderen Hauptrahmen wird im Sinne der vorliegenden Anmeldung als eine Anordnung des vorderen Hauptrads an dem vorderen Hauptrahmen verstanden.

In einem zwischen den beiden Haupträdern befindlichen Zwischenbereich sind mindestens zwei Stützräder angeordnet. Diese werden in der Technik auch als sogenannte "Midroller" bezeichnet. Die Stützräder weisen typischerweise gegenüber den Haupträdern einen kleineren Durchmesser auf. Sie stehen ebenso wie die Haupträder unmittelbar mit dem Laufgurt im Kontakt, wobei die Stützräder mit einem unteren Abschnitt des Laufgurts in Kontakt stehen, der im Betrieb des Raupenlaufwerks typischerweise unmittelbar mit einem Untergrund in Kontakt tritt. Auf diese Weise können auf das Raupenlaufwerk einwirkende Kräfte sowohl über die beiden Haupträder als auch über die beiden Stützräder über den Laufgurt in den Untergrund abgeleitet werden.

Das Raupenlaufwerk umfasst ferner eine Anlenkstelle, mittels der es unter Ausbildung einer Maschinenachse schwenkbeweglich mit einer Karosserie einer jeweiligen Arbeitsmaschine verbindbar ist. Bei einer typischen landwirtschaftlichen Arbeitsmaschine wie beispielsweise einem Mähdrescher oder einem Feldhäcksler ist an einander gegenüberliegenden Enden einer Vorderachse der jeweiligen Arbeitsmaschine jeweils ein Raupenlaufwerk angeordnet. Das jeweilige Raupenlaufwerk ist dabei an der genannten Anlenkstelle an die Vorderachse der Arbeitsmaschine angelenkt, sodass die Arbeitsmaschine mittels der Raupenlaufwerke auf einem jeweiligen Untergrund aufsteht und über die Raupenlaufwerke ein Vortrieb der Arbeitsmaschine bewirkt werden kann.

Die beiden Hauptrahmen, denen die Haupträder zugeordnet sind, sind schwenkbeweglich miteinander gekoppelt. Hierdurch wird bewirkt, dass die Hauptrahmen gegeneinander um eine gemeinsame Schwenkachse relativ zueinander verschwenkbar sind. Bevorzugt ist diese Schwenkachse identisch zu der Maschinenachse an der Anlenkstelle des Raupenlaufwerks. Die Schwenkachse und die Maschinenachse sind jeweils horizontal sowie senkrecht zu einer von dem Laufgurt aufgespannten Laufgurtebene orientiert.

Die Stützräder sind an einem gemeinsamen Stützrahmen angeordnet, wobei sie bezogen auf eine Längsachse des Raupenlaufwerks hintereinander angeordnet sind. Mithin sind die Haupträder und die Stützräder in Längsrichtung des Raupenlaufwerks betrachtet "in Reihe" angeordnet, wobei das vordere Hauptrad ein vorderes Ende des Raupenlaufwerks bildet, sodann die beiden Stützräder folgen und schließlich das hintere Hauptrad das hintere Ende des Raupenlaufwerks bildet.

Zur Verbindung des Stützrahmens mit den Hauptrahmen ist eine Stützradschwinge vorgesehen, mittels der der Stützrahmen schwenkbeweglich mit dem vorderen Hauptrahmen verbunden ist. Die Stützradschwinge ist hierbei gelenkig sowohl mit dem vorderen Hauptrahmen als auch mit dem Stützrahmen verbunden. Die Stützradschwinge ist demzufolge in mechanischer Hinsicht als Pendelstab ausgebildet. Die gelenkige Verbindung der beiden Hauptrahmen sowie die gelenkige Verbindung der Stützradschwinge mit dem vorderen Hauptrahmen trägt dazu bei, dass jeweils die Haupträder und die Stützräder bei Überfahren eines Hindernisses getrennt voneinander angehoben werden können, ohne dass der Rest des Raupenlaufwerks vom Untergrund abhebt.

Raupenlaufwerke der vorstehend beschriebenen Art sind im Stand der Technik bereits bekannt. Hierzu wird beispielhaft auf die deutsche Offenlegungsschrift DE 10 2014 003 964 A1 hingewiesen. Die dort beschriebene Erfindung hat zum Gegenstand, dass die vorstehend als Schwenkachse bezeichnete Achse, um die der vordere Hauptrahmen und der hintere Hauptrahmen schwenkbeweglich relativ zueinander gelagert sind, und die Maschinenachse zusammenfallen, die sich an der Anlenkstelle des Raupenlaufwerks einer jeweiligen Arbeitsmaschine befindet.

Um eine Kraftabtragung, die über ein Raupenlaufwerk in einen jeweiligen Untergrund stattfindet, möglichst gleichmäßig über die einzelnen Räder des Raupenlaufwerks (sowohl Haupträder als auch Stützräder) zu bewirken, umfasst ein Raupenlaufwerk typischerweise mindestens eine Kolben-Zylinder-Einheit, die an einem ersten Ende mit der Stützradschwinge und mit einem zweiten Ende mit dem vorderen Hauptrahmen verbunden ist. Ferner ist es bekannt, dass das Raupenlaufwerk mindestens eine weitere Kolben-Zylinder-Einheit umfasst, die den vorderen Hauptrahmen und den hinteren Hauptrahmen miteinander verbindet. Die Aufgabenstellung für derartige Kolben-Zylinder-Einheiten besteht im Grunde darin, die Kraftverteilung über die einzelnen Räder zu vergleichmäßigen, und zwar auch dann, wenn Hindernisse überfahren werden, das heißt das Raupenlaufwerk nicht vollständig auf einem zumindest im Wesentlichen ebenen Untergrund aufsteht. Mit anderen Worten sollen über das Raupenlaufwerk abgeleitete Kräfte möglichst gleichmäßig über die Räder in den Untergrund geleitet werden.

Hierbei hat es sich im Stand der Technik als aufwendig herausgestellt, derartige Raupenlaufwerke zu konstruieren, da der zur Verfügung stehende Bauraum zur Anordnung verschiedener Kolben-Zylinder-Einheiten knapp ist. Zudem ist die Abstimmung zwischen den einzelnen Kolben-Zylinder-Einheiten aufwendig, um in verschiedenen Betriebssituationen des jeweiligen Raupenlaufwerks, das heißt insbesondere für unterschiedliche Randbedingungen betreffend den Untergrund, durchgehend zu einem möglichst gleichmäßigen Kraftabtrag über die Räder des Raupenlaufwerks zu kommen.

Der vorliegenden Anmeldung liegt mithin die Aufgabe zugrunde, ein Raupenlaufwerk für eine landwirtschaftliche Arbeitsmaschine bereitzustellen, das gegenüber dem Stand der Technik einfacher konstruiert ist.

Die zugrunde liegende Aufgabe wird erfindungsgemäß mittels eines Raupenlaufwerks mit den Merkmalen des Anspruchs 1 gelöst. Vorteilhafte Ausgestaltungen ergeben sich aus den zugehörigen Unteransprüchen.

Das erfindungsgemäße Raupenlaufwerk ist durch eine Dämpfungseinrichtung gekennzeichnet, die mindestens eine Kolben-Zylinder-Einheit und mindestens eine hydraulisch wirkende Druckeinrichtung umfasst. Die Kolben-Zylinder-Einheit kann einfachwirkend oder doppelwirkend ausgebildet sein. Sie ist dazu vorgesehen und eingerichtet, Bewegungen, die die Stützräder und der hintere Hauptrahmen relativ zueinander ausführen, zu dämpfen. Unter einer hydraulischen Druckeinrichtung wird im Sinne der vorliegenden Anmeldung eine Einrichtung verstanden, mittels der mindestens ein Arbeitsraum einer Kolben-Zylinder-Einheit mit hydraulischem Druck beaufschlagbar ist. Dies kann sowohl passiv als auch aktiv geschehen, das heißt die Druckeinrichtung kann von einer aktiven oder einer passiven Druckeinrichtung gebildet sein.

Eine "passive Druckeinrichtung" kann im Sinne der vorliegenden Anmeldung insbesondere von einem Gasspeicher gebildet sein. Ein solcher umfasst in der Regel zwei durch eine Membran fluidtechnisch getrennte Druckräume, wobei der eine Druckraum mit unter Druck stehendem Gas gefüllt ist ("Gasraum") und der andere Druckraum ("Fluidraum") mit einem hydraulischen Fluid eines hydraulischen Systems in strömungstechnischem Kontakt steht, wobei zu dem hydraulischen System mindestens ein Arbeitsraum einer jeweiligen Kolben-Zylinder-Einheit gehört. Auf diese Weise kann das hydraulische Fluid aus dem Arbeitsraum der Kolben-Zylinder-Einheit verdrängt werden und in den Fluidraum des Gasspeichers einströmen, wobei im Zuge dessen die Membran verformt und das Gas, das sich in dem Gasraum befindet, komprimiert wird. Das Gas baut hierdurch einen steigenden Gegendruck auf. Umgekehrt drückt das Gas die Membran - und mithin das in dem Fluidraum befindliche hydraulische Fluid - wieder zurück in den Arbeitsraum der Kolben-Zylinder-Einheit, sobald sich das Volumen des letzteren vergrößert bzw. ein Gegendruck eines Kolbens der Kolben-Zylinder-Einheit absinkt und den in dem Gasraum der Druckeinrichtung herrschenden Druck unterschreitet. In diesem Fall drückt die Druckeinrichtung effektiv den Kolben der Kolben-Zylinder-Einheit zurück. Diese Prozesse sind im Sinne der vorliegenden Anmeldung passiv, da die Druckeinrichtung nicht dazu vorgesehen und eingerichtet ist, aktiv einen veränderlichen Druck auf das hydraulische System auszuüben, beispielsweise mittels einer Pumpe. Zwar kann die passive Druckeinrichtung vorgespannt sein und somit einen Druck auf das hydraulische System ausüben. Im Übrigen reagiert sie jedoch nur auf von außen in das hydraulische System eingebrachte Veränderungen.

Eine "aktive Druckeinrichtung" ist im Gegensatz dazu im Sinne der vorliegenden Anmeldung eine solche, mittels der ein Druck in einem hydraulischen System aktiv veränderbar ist. Hierzu kann die Druckeinrichtung mit einer Druckquelle, beispielsweise einer Pumpe, zusammenwirken oder eine solche integriert umfassen. Als eine Ausführungsvariante einer aktiven Druckeinrichtung ist beispielsweise denkbar, dass der Druckeinrichtung eine Druckquelle zugeordnet ist. Eine solche Druckquelle kann eine hydraulischen Druck bereitstellen, der zumindest auch auf die Druckeinrichtung wirkt. Letztere kann hierbei als solche von einer passiven Druckeinrichtung gebildet sein, beispielsweise in Form eines Gasspeichers. Folglich ist eine Gesamtheit aus einer passiven Druckeinrichtung in Zusammenwirkung mit einer Druckquelle im Sinne der vorliegenden Anmeldung auch als "aktive Druckeinrichtung" auffassbar.

Die Kolben-Zylinder-Einheit ist an ihrem ersten Ende ("Schwingenende") mit der Stützradschwinge und an ihrem zweiten Ende ("Rahmenende") mit dem hinteren Hauptrahmen gekoppelt ist. Hierdurch sind der hintere Hauptrahmen und die Stützradschwinge mittels der Kolben-Zylinder-Einheit in kraftübertragender Weise miteinander gekoppelt. In besonders bevorzugter Weise ist das Raupenlaufwerk abgesehen von der genannten Kolben-Zylinder-Einheit sowie der gelenkigen Anlenkung an den vorderen Hauptrahmen frei von weiteren Verbindungen zwischen der Stützradschwinge und dem vorderen oder hinteren Hauptrahmen ausgebildet.

Das erfindungsgemäße Raupenlaufwerk hat viele Vorteile. Insbesondere wird eine Kraftverteilung zwischen den Haupträdern und den Stützrädern allein mittels der einen Kolben-Zylinder-Einheit zwischen der Stützradschwinge und dem hinteren Hauptrahmen bewirkt. Dies ist beispielhaft anhand folgender Fallunterscheidungen veranschaulicht: Zunächst wird der Fall betrachtet, dass das vordere Hauptrad über ein Hindernis fährt und dadurch gegenüber den Stützrädern und dem hinteren Hauptrad angehoben wird. Die Anhebung des vorderen Hauptrades geht mit der Anhebung des vorderen Hauptrahmens einher, an dem die Stützradschwinge gelagert ist. An die Stützradschwinge ist gemäß vorstehender Erläuterung die Kolben-Zylinder-Einheit mit ihrem Schwingenende angelenkt. Dementsprechend wird auch die Kolben-Zylinder-Einheit ein Stück weit angehoben. Die Beträge der Anhebungen des vorderen Hauptrads und der Kolben-Zylinder-Einheit stehen im Verhältnis ihrer jeweiligen Abstände bezogen auf die Schwenkachse, um die der vordere Hauptrahmen im Zuge der Anhebung des vorderen Hauptrades verschwenkt wird. Da die Kolben-Zylinder-Einheit an seinem dem Schwingenende gegenüberliegenden Rahmenende mit dem hinteren Hauptrahmen gekoppelt ist, wird entsprechend der Anhebung der Kolben-Zylinder-Einheit auch der hintere Hauptrahmen ein Stück weit angehoben. Da sowohl die Stützradschwinge gelenkig an dem Stützrahmen als auch der hintere Hauptrahmen gelenkig an dem hinteren Hauptrad angeordnet sind, bleiben das hintere Hauptrad und die Stützräder auf ihrem bisherigen Höhenniveau und werden mithin nicht von dem Untergrund abgehoben. Die Kolben-Zylinder-Einheit stellt dabei sicher, dass die Stützräder weiterhin zur Abtragung von Kräften herangezogen werden und mithin zum Kraftabtrag der jeweiligen Arbeitsmaschine bis in den Untergrund beitragen.

In dem zweiten hier betrachteten Fall überfahren die Stützräder ein Hindernis und werden dementsprechend angehoben. Dies geht ebenfalls mit einer Anhebung der Stützradschwinge einher, an die die Kolben-Zylinder-Einheit angelenkt ist. Da die Stützradschwinge im Übrigen mit dem vorderen Hauptrahmen lediglich unter Ausbildung eines Gelenks verbunden ist, wird der vordere Hauptrahmen lediglich indirekt bewegt, nämlich infolge einer Anhebung des hinteren Hauptrahmens über die Kolben-Zylinder-Einheit und einer damit einhergehenden Anhebung der Verbindungsstelle, an der der vordere Hauptrahmen unter Ausbildung der Gelenkachse mit dem hinteren Hauptrahmen verbunden ist. Da das vordere Hauptrad unter Ausbildung seiner Drehachse dem vorderen Hauptrahmen zugeordnet ist, geht die Verschwenkung des vorderen Hauptrahmens nicht mit einer Anhebung des vorderen Hauptrads einher. Letzteres steht demzufolge weiterhin über den Laufgurt in Kontakt mit dem Untergrund und kann hierdurch auf das Raupenlaufwerk einwirkende Kräfte in den Untergrund ableiten. Für das hintere Hauptrad gilt dies analog.

Das vorstehend beschriebene Prinzip gilt bei einer Anhebung des hinteren Hauptrades infolge des Überfahrens eines Hindernisses analog, wobei die Einleitung von Kräften in die Stützräder über die Kolben-Zylinder-Einheit erfolgt.

Mithin hat das erfindungsgemäße Raupenlaufwerk den besonderen Vorteil, dass es in der einfachsten Ausgestaltung mit lediglich einer einzigen Kolben-Zylinder-Einheit sicherstellt, dass fortwährend ein zuverlässiger Abtrag von Kräften über die beiden Haupträder und die beiden Stützräder in den Untergrund erfolgt. Hierdurch kann das Raupenlaufwerk besonders einfach konstruiert werden, wobei insbesondere auf ein gesondertes Koppelglied, das im Stand der Technik typischerweise ebenfalls als Kolben-Zylinder-Einheit ausgebildet ist, verzichtet werden kann.

In besonders bevorzugter Ausgestaltung ist die mindestens eine Druckeinrichtung in die Kolben-Zylinder-Einheit integriert ausgebildet. Diese Ausgestaltung ist besonders vorteilhaft, wenn die Kolben-Zylinder-Einheit einfachwirkend ausgebildet ist. Diese Ausgestaltung ist besonders vorteilhaft, da hierdurch Bauraum gespart wird und die Kolben-Zylinder-Einheit insgesamt kompakter baut.

Weiterhin kann es besonders vorteilhaft sein, wenn die Dämpfungseinrichtung mindestens zwei Druckeinrichtungen, vorzugweise genau zwei Druckeinrichtungen, umfasst, die mit derselben Kolben-Zylinder-Einheit zusammenwirken. Bei dieser Ausgestaltung kann die Kolben-Zylinder-Einheit beispielsweise und bevorzugt doppelwirkend ausgebildet sein, wobei die erste Druckeinrichtung mit einem zylinderseitigen Hauptarbeitsraum der Kolben-Zylinder-Einheit und die zweite Druckeinrichtung mit einem kolbenseitigen Nebenarbeitsraum der Kolben-Zylinder-Einheit wirkverbunden sind.

Mindestens eine der Druckeinrichtungen, vorzugsweise beide Druckeinrichtungen, sind dabei vorzugsweise nach Art eines passiven Gasspeichers ausgebildet. Hierdurch kann die Kolben-Zylinder-Einheit insgesamt besonders gut als Gasfeder wirken und Stoßbelastungen, die von der Kolben-Zylinder-Einheit zwischen der Stützradschwinge und dem hinteren Hauptrahmen übertragen werden, dämpfen. Hierdurch ist sichergestellt, dass ein guter Fahrkomfort für die jeweilige Arbeitsmaschine, an der das Raupenlaufwerk angeordnet ist, gegeben ist. Insbesondere können schlagartige Auslenkungen infolge des Überfahrens von Hindernissen und dadurch entstehende Kräfte gedämpft werden. Neben einer Verbesserung des Fahrkomforts ferner auch die Komponenten des Raupenlaufwerks sowie der jeweiligen Arbeitsmaschine insgesamt geschont.

Sofern beide Druckeinrichtungen passiv ausgebildet sind, kann es weiterhin vorteilhaft sein, wenn die Druckeinrichtungen mit unterschiedlichen Drücken vorgespannt sind. Hierbei ist vorzugsweise die erste Druckeinrichtung, die mit dem Hauptarbeitsraum wirkverbunden ist, mit einem größeren Druck vorgespannt als die zweite Druckeinrichtung, die mit dem Nebenarbeitsraum wirkverbunden ist. Das Druckverhältnis zwischen den Druckeinrichtungen kann beispielsweise und vorzugsweise mindestens 1,5:1, vorzugsweise mindestens 2:1, und zwar unabhängig davon, welche Druckeinrichtung welchem der Arbeitsräume zugeordnet ist. Gleichwohl ist es bevorzugt, wenn die stärker vorgespannte Druckreinrichtung diejenige ist, die dem Hauptarbeitsraum zugeordnet ist. Die Vorspannung der Druckeinrichtungen mit unterschiedlichen Drücken hat den Vorteil, dass selbige in unterschiedlichen Kraftbereichen besonders gut zur Dämpfung beitragen können. Während bei einer vergleichsweise niedrigen Belastung des Raupenlaufwerks, beispielsweise bei einem Mähdrescher bei einer Straßenfahrt mit leerem Korntank, die eine Druckeinrichtung in einem möglichst idealen Bereich ihrer Kennlinie mit Druck aus der Kolben-Zylinder-Einheit belastet wird, gilt dasselbe für eine vergleichsweise hohe Belastung des Raupenlaufwerks, beispielsweise im Ernteeinsatz auf dem Feld mit gefülltem Korntank, für die andere Druckeinrichtung. Somit ist der Dämpfungseffekt der Kolben-Zylinder-Einheit insgesamt über verschiedene Lastbereiche hinweg gut verteilt und die Dämpfungseinrichtung bietet insgesamt über einen weiten Belastungsbereich eine gute Dämpfungswirkung.

Alternativ zu einer Ausführung, bei der beide Druckeinrichtungen, die mit derselben Kolben-Zylinder-Einheit zusammenwirken, von passiven Gasspeichern gebildet sind, ist es ebenfalls denkbar, dass mindestens eine Druckeinrichtung, vorzugsweise beide Druckeinrichtungen, aktiv ausgebildet ist bzw. sind, das heißt entweder selbst eine hydraulische Druckquelle umfasst oder an eine solche angeschlossen ist bzw. mit einer solchen zusammenwirkt. Bevorzugt umfasst auch die jeweilige aktive Druckeinrichtung einen passiven Gasspeicher.

Mittels der hydraulischen Druckquelle kann während eines bestimmungsgemäßen Betriebs des Raupenlaufwerks an einer landwirtschaftlichen Arbeitsmaschine aktiv ein hydraulischer Druck in dem Hauptarbeitsraum und/oder dem Nebenarbeitsraum der Kolben-Zylinder-Einheit verändert werden. Bevorzugt ist dem kolbenseitigen Nebenarbeitsraum der Kolben-Zylinder-Einheit eine aktive Druckeinrichtung zugeordnet.

Die Nutzung einer aktiven Druckeinrichtung hat den Vorteil, dass der Druck in dem jeweilig zugeordneten Arbeitsraum bei Bedarf manipuliert werden kann, um die Dämpfungscharakteristik der Kolben-Zylinder-Einheit zu beeinflussen. Insbesondere kann die Kolben-Zylinder-Einheit auf diese Weise in einem günstigen Bereich ihrer Kennlinie gehalten werden, sodass Stöße besonders gut gedämpft werden. Beispielsweise ist es denkbar, dass die Kolben-Zylinder-Einheit dafür ausgelegt ist, dass große Kräfte über das Raupenlaufwerk in den Untergrund eingeleitet werden. Dies ist gleichbedeutend damit, dass die Kolben-Zylinder-Einheit zwischen ihrem Schwingenende und ihrem Rahmenende große Kräfte überträgt. Die Auslegung der Kolben-Zylinder-Einheit für einen solchen Lastfall, der sinnvollerweise einen Großteil eines typischen Nutzungsprofils der jeweiligen Arbeitsmaschine ausmacht, bedeutet, dass die Dämpfungscharakteristik der Kolben-Zylinder-Einheit für diesen Lastfall besonders gutmütig ist. Falls ein anderer Lastfall auftritt, insbesondere ein solcher, bei dem das Raupenlaufwerk deutlich geringere Kräfte in den Untergrund ableiten muss, wirkt die Kolben-Zylinder-Einheit abseits eines bestmöglichen Betriebspunkts, das heißt die Dämpfungscharakteristik ist nicht ideal. Mittels der aktiven Druckeinrichtung kann in einem solchen Fall ein zusätzlicher hydraulischer Druck auf den jeweiligen Arbeitsraum, insbesondere den Hauptarbeitsraum, aufgebracht werden, um eine höhere Belastung des Raupenlaufwerks zu "simulieren". Auf diese Weise wird die Kolben-Zylinder-Einheit in einem Idealbereich ihrer Kennlinie gehalten, sodass die Dämpfungscharakteristik der Kolben-Zylinder-Einheit möglichst gut ist.

Bei dieser Ausgestaltung kann es vorteilhaft sein, wenn die zweite Druckeinrichtung nach Art einer passiven Druckeinrichtung ausgebildet ist und beispielsweise nur einen passiven Gasspeicher umfasst.

Das Raupenlaufwerk weiter ausgestaltend kann es vorteilhaft sein, wenn die Drehachsen der beiden Haupträder und die Schwenkachse zumindest bei Vorliegen des Raupenlaufwerks in einer Mittellage zumindest im Wesentlichen auf einem gemeinsamen Höhenniveau liegen. Die Schwenkachse befindet sich bei Vorliegen des Raupenlaufwerks in dessen Mittellage in ihrer Nulllage. Die Mittellage des Raupenlaufwerks beschreibt dabei im Sinne der vorliegenden Anmeldung einen Zustand des Raupenlaufwerks, in dem selbiges auf einem ebenen Untergrund aufsteht, das heißt weder die Haupträder noch die Stützräder ein Hindernis überfahren. Eine solche Mittellage eines Raupenlaufwerks ist in den Figuren des Ausführungsbeispiels jeweils veranschaulicht. Die Anordnung der Schwenkachse auf demselben Höhenniveau wie die Drehachsen der Haupträder führt dazu, dass infolge einer Gurtspannung des Laufgurts kein Drehmoment um die Schwenkachse bewirkt wird. Aufgrund des zumindest im Wesentlichen identischen vertikal gemessenen Abstands eines oberen Abschnitts des Laufgurts von der Schwenkachse im Vergleich zu dem vertikal gemessenen Abstand eines unteren Abschnitts des Laufgurts von der Schwenkachse heben sich die in dem Laufgurt herrschenden Kräfte durch ihren identischen Hebelarm bezogen auf die Schwenkachse gegeneinander auf, sodass kein Drehmoment auftritt. Ein solches tritt erst dann auf, wenn die Schwenkachse aus ihrer Nulllage heraus vertikal verlagert wird, was infolge einer Anhebung eines der Räder des Raupenlaufwerks geschehen kann.

Sofern es zu einer Auslenkung der Schwenkachse ausgehend von ihrer Nulllage in vertikale Richtung kommt, wie dies beispielsweise infolge der Anhebung mindestens eines der Räder des Laufwerks bei dem Überfahren eines Hindernisses geschieht, ist mit der Eintragung eines durch den Laufgurt und dessen Gurtspannung bewirkten Drehmoments um die Schwenkachse zu rechnen, da in aller Regel die Abstände des oberen Abschnitts des Laufgurts und des unteren Abschnitts des Laufgurts jeweils von der Schwenkachse infolge der vertikalen Verlagerung der Schwenkachse unterschiedlich sein werden. Entsprechend sind die Hebelarme zwischen dem unteren Abschnitt des Laufgurts und der Schwenkachse sowie dem oberen Abschnitt des Laufgurts und der Schwenkachse verschieden, sodass sich die infolge der Gurtspannung um die Schwenkachse erzeugten Drehmomente nicht gegenseitig aufheben. Dabei gilt, dass eine umso größere Auslenkung der Schwenkachse in vertikale Richtung zu einem umso größeren, effektiv an der Schwenkachse wirkenden Drehmoment führt, das eine Verschwenkung des vorderen Hauptrahmens relativ zu dem hinteren Hauptrahmen um die Schwenkachse bewirkt. Das System verstärkt sich dabei selbst.

Entsprechend kann es ferner vorteilhaft sein, wenn das Raupenlaufwerk mindestens ein Federelement umfasst. Dieses ist bevorzugt passiv ausgebildet, wobei eine von dem Federelement bewirkte Federkraft allein durch deren Federkonstante und eine Auslenkung der Feder aus einem kraftfreien Zustand bedingt ist. Ein erstes Ende des Federelements ist an den vorderen Hauptrahmen und ein zweites Ende des Federelements an der hinteren Hauptrahmen angeschlossen. Auf diese Weise verbindet das Federelement die beiden Hauptrahmen miteinander, sodass bei einer Verschwenkung der beiden Hauptrahmen relativ zueinander um die Schwenkachse das Federelement gestreckt oder gestaucht wird. Entsprechend ergibt sich eine Änderung der Auslenkung der Feder und mithin einer von dem Federelement ausgeübten Federkraft, die an den Enden des Federelements in den vorderen Hauptrahmen und den hinteren Hauptrahmen eingetragen wird. Das Federelement ist derart angeordnet, dass sich eine Wirkachse des Federelements, entlang der die Federkraft wirkt, in einem Abstand zu der Schwenkachse befindet. Auf diese Weise wird infolge der Federkraft ein Drehmoment um die Schwenkachse auf die beiden Hauptrahmen ausgeübt. Da die Federkraft an den Enden des Federelements prinzipbedingt in entgegengesetzte Richtung auf den vorderen Hauptrahmen und den hinteren Hauptrahmen einwirkt, werden der vordere Hauptrahmen und der hintere Hauptrahmen mit einander entgegengesetzten Drehmomenten um die gemeinsame Schwenkachse beaufschlagt.

Hierbei ist das Federelement bevorzugt derart konfiguriert, dass es sich bei Vorliegen des Raupenlaufwerks in der Mittellage (und mithin bei Vorliegen der Schwenkachse in ihrer Nulllage) entweder in einem Passivzustand, in dem das Federelement weder Zugkräfte noch Druckkräfte entwickelt, oder in einem je nach Anordnung mit Zugspannung oder Druckspannung vorgespannten Zustand befindet. Da sich die Schwenkachse ausgehend von ihrer Nulllage typischerweise nicht nach unten verlagern kann, ist in aller Regel lediglich der Fall zu betrachten, dass die Schwenkachse ausgehend von ihrer Nulllage vertikal nach oben verlagert wird. Entsprechend ist hinsichtlich der Wirkung der Gurtspannung lediglich ein solcher Zustand zu betrachten, bei dem sich das Raupenlaufwerk nach oben "aufstellt", das heißt die Schwenkachse infolge ihrer Bewegung vertikal nach oben durch Wirkung eines durch die Gurtspannung des Laufgurts bedingten Drehmoments weiter nach oben ausgelenkt wird. Das Federelement dient dazu, ebendieser Bewegung entgegenzuwirken und das sogenannte "Aufstellen" des Raupenlaufwerks zumindest zu vermindern oder zu begrenzen.

Sofern das Federelement derart angeordnet ist, dass sich die beiden Enden des Federelements im Zuge einer beschriebenen Aufstellbewegung des Raupenlaufwerks voneinander entfernen, ist das Federelement bevorzugt als Zugfeder ausgebildet, die mit einer Zugspannung vorgespannt ist. Umgekehrt kann das Federelement auch derart angeordnet sein, dass sich dessen beiden Enden an Stellen des vorderen Hauptrahmens und des hinteren Hauptrahmens befinden, die sich infolge des Aufstellens des Raupenlaufwerks aufeinander zu bewegen. In diesem Fall ist das Federelement bevorzugt als Druckfeder ausgebildet, die mit einer Druckspannung vorgespannt ist. In jedem Fall soll das Federelement derart wirken, dass es der infolge des Aufstellens des Raupenlaufwerks bedingten Verschwenkung des vorderen Hauptrahmens relativ zu dem hinteren Hauptrahmen entgegenwirkt.

In einer weiterhin vorteilhaften Ausgestaltung des Raupenlaufwerks umfasst die Dämpfungseinrichtung eine zweite Kolben-Zylinder-Einheit, deren erstes Ende an den vorderen Hauptrahmen und deren zweites Ende an den hinteren Hauptrahmen angeschlossen sind. Die zweite Kolben-Zylinder-Einheit ist dazu vorgesehen und eingerichtet, den vorderen Hauptrahmen und den hinteren Hauptrahmen aktiv mit einem gegenseitigen Drehmoment um die gemeinsame Schwenkachse zu beaufschlagen. Auf diese Weise ist die zweite Kolben-Zylinder-Einheit, die einfachwirkend oder doppelwirkend ausgebildet sein kann, dazu geeignet, dem vorstehend beschriebenen Aufstellen des Raupenlaufwerks entgegenzuwirken, wenn die Schwenkachse sich aus ihrer Nulllage heraus nach oben bewegt und infolgedessen durch die Gurtspannung des Laufgurts Drehmomente in die Hauptrahmen eingetragen werden.

Sofern die Dämpfungseinrichtung eine zweite Kolben-Zylinder-Einheit umfasst, kann es besonders vorteilhaft sein, wenn die eine Druckeinrichtung mit der ersten Kolben-Zylinder-Einheit und die andere Druckeinrichtung mit der zweiten Kolben-Zylinder-Einheit zusammenwirken. Auf diese Weise können beide Kolben-Zylinder-Einheiten zur passiven Dämpfung und/oder zur aktiven Ausübung von Kräften auf die jeweils angeschlossenen Bauteile genutzt werden.

Besonders bevorzugt ist hierbei, wenn die mindestens eine Druckeinrichtung mit der ersten Kolben-Zylinder-Einheit zusammenwirkt, die mit der Stützradschwinge und dem hinteren Hauptrahmen zusammenwirkt. Diese Druckeinrichtung ist bevorzugt nach Art eines passiven Gasspeichers ausgebildet ist. Insbesondere kann die Druckeinrichtung einem Arbeitsraum der ersten Kolben-Zylinder-Einheit zugeordnet sein, wobei die Kolben-Zylinder-Einheit vorzugsweise einfachwirkend ausgebildet ist. Auf diese Weise ist die erste Kolben-Zylinder-Einheit besonders gut dazu geeignet, Stoßbelastungen, die auf die Stützräder wirken, in ihrer Übertragung auf den hinteren Hauptrahmen zu dämpfen.

Ferner kann es vorteilhaft sein, wenn die Dämpfungseinrichtung eine zweite Druckeinrichtung umfasst, die der zweiten Kolben-Zylinder-Einheit zugeordnet ist. Die zweite Druckeinrichtung umfasst bevorzugt eine hydraulischen Druckquelle oder ist bevorzugt an eine hydraulische Druckquelle angeschlossen, wobei mittels der hydraulischen Druckquelle während eines bestimmungsgemäßen Betriebs des Raupenlaufwerks aktiv ein veränderlicher hydraulischer Druck auf einen Arbeitsraum der zweiten Kolben-Zylinder-Einheit aufbringbar ist. Vorteilhafterweise umfasst die zweite Druckeinrichtung zusätzlich einen passiven Gasspeicher. Weiterhin kann es vorteilhaft sein, wenn die zweite Kolben-Zylinder-Einheit einfachwirkend ausgebildet ist.

In Kombination mit einer solchen zweiten Druckeinrichtung ist die zweite Kolben-Zylinder-Einheit besonders gut dazu geeignet, einem möglichen Aufstellen des Raupenlaufwerks, das vorstehend beschrieben ist, entgegenzuwirken. Insbesondere kann mittels der zweiten Druckeinrichtung bzw. der ihr zugeordneten Druckquelle ein solcher hydraulischer Druck auf den Arbeitsraum der zweiten Kolben-Zylinder-Einheit ausgeübt werden, dass die beiden Hauptrahmen, an denen die zweite Kolben-Zylinder-Einheit mit ihren Enden befestigt ist, in solcher Weise mit einem gegenseitigen Drehmoment beaufschlagt werden, dass einer Aufstellbewegung des Raupenlaufwerks entgegengewirkt wird. Auf diese Weise können die Haupträder und die Stützräder bei Bedarf jeweils in dauerhaftem Kontakt mit dem Untergrund gehalten werden, um auf das Raupenlaufwerk einwirkende Kräfte zuverlässig in den Untergrund abzuleiten.

In einer vorteilhaften Ausgestaltung des Raupenlaufwerks ist die zumindest eine Kolben-Zylinder-Einheit der Dämpfungseinrichtung derart ausgerichtet, dass eine in sich gerade Längsachse der Kolben-Zylinder-Einheit, die das Schwingenende und das Rahmenende der Kolben-Zylinder-Einheit miteinander verbindet, höchstens um 15°, vorzugsweise höchstens um 10°, weiter vorzugsweise höchstens um 5°, gegen eine Vertikale geneigt orientiert ist. Diese Ausgestaltung hat den Vorteil, dass die Kraftverteilung zwischen den Haupträdern und den Stützrädern besonders einfach bewerkstelligt werden kann. Insbesondere sind keine übrigen ausgleichenden Elemente oder dergleichen erforderlich, die eine betragsmäßig gewünschte Krafteinleitung in die Stützradschwinge und die Stützräder sicherstellen, falls die Kolben-Zylinder-Einheit "schräg" orientiert wäre.

Ferner kann es besonders von Vorteil sein, wenn die Schwenkachse der beiden Hauptrahmen und die Maschinenachse zusammenfallen. Bei dieser Ausgestaltung weist das Raupenlaufwerk ein zentrales Hauptgelenk auf, das die Anlenkstelle bildet und an dem es unter Ausbildung der Maschinenachse an eine jeweilige Achse einer Arbeitsmaschine angeschlossen ist. An diesem zentralen Hauptgelenk ist ferner die Schwenkachse ausgebildet, an der der vordere Hauptrahmen und der hintere Hauptrahmen miteinander schwenkbeweglich verbunden sind. Bevorzugt befindet sich die Anlenkstelle - und mithin die Maschinenachse und die Schwenkachse - in Längsrichtung des Raupenlaufwerks betrachtet mittig an dem Raupenlaufwerk, sodass ein horizontal gemessener Abstand der Drehachse des vorderen Hauptrads von der Schwenkachse zumindest im Wesentlichen genauso groß ist wie ein horizontal gemessener Abstand der Drehachse des hinteren Hauptrades von der Schwenkachse. Diese Ausgestaltung trägt ebenfalls zu einer Vereinfachung des Raupenlaufwerks bei, da die Kinematik der möglichen Relativbewegungen der einzelnen Elemente zueinander gegenüber einer Ausgestaltung, bei der die Schwenkachse und Maschinenachse getrennt voneinander angeordnet sind, vereinfacht ist.

In einer weiterhin vorteilhaften Ausgestaltung sind das Schwingenende und das Rahmenende der mindestens einen Kolben-Zylinder-Einheit in Längsrichtung des Raupenlaufwerks betrachtet auf derselben Seite einer vertikal orientierten Mittelebene angeordnet, die die Schwenkachse beinhaltet. Diese Mittelebene, die senkrecht zu einer von dem Laufgurt aufgespannten Laufgurtebene orientiert ist, trennt das Raupenlaufwerk gedanklich in einen vorderen Abschnitt und einen hinteren Abschnitt, wobei der vordere Abschnitt den vorderen Hauptrahmen und das vordere Hauptrad sowie der hintere Abschnitt den hinteren Hauptrahmen und das hintere Hauptrad umfassen. Gemäß vorstehender Beschreibung befindet sich die Schwenkachse bevorzugt in Übereinstimmung ihrer Lage mit der Maschinenachse und weiterhin bevorzugt in einer in Längsrichtung betrachteten Mitte des Raupenlaufwerks.

Die Anordnung der mindestens einen Kolben-Zylinder-Einheit auf einer Seite der Mittelebene, vorzugsweise auf der Seite des vorderen Abschnitts, trägt ebenfalls zu einer besonders einfachen Kinematik des Raupenlaufwerks bei. Hierbei kann über den Abstand der Kolben-Zylinder-Einheit von der Schwenkachse das Kräfteverhältnis eingestellt werden, in dem die Stützradschwinge und mithin die Stützräder mit Kräften beaufschlagt bzw. zur Ableitung von Kräften in den Untergrund herangezogen werden. Dabei gilt, dass die Stützräder eine umso größere Kraftabtragung bewirken, desto näher sich das Schwingenende der Kolben-Zylinder-Einheit entlang der Stützradschwinge betrachtet an dem Stützrahmen befindet. Beispielsweise kann das Schwingenende genau in der Mitte der Stützradschwinge angeordnet sein, sodass Kräfte, die mittels der Kolben-Zylinder-Einheit in die Stützradschwinge eingeleitet werden, sich hälftig auf die Anlenkung der Stützradschwinge an den vorderen Hauptrahmen und den Stützrahmen aufteilen. Eine Verlagerung des Schwingenendes entlang der Stützradschwinge führt entsprechend zu einer von der hälftigen Aufteilung abweichenden Aufteilung der Kräfte auf den vorderen Hauptrahmen und den Stützrahmen. Bevorzugt befindet sich das Schwingenende der Kolben-Zylinder-Einheit in eine Richtung parallel zu der Längsachse des Raupenlaufwerks betrachtet in einem Abstand von der Schwenkachse von höchstens 1/4, vorzugsweise höchstens einem 1/6, weiter vorzugsweise höchstens 1/8, eines entsprechend gemessenen Radabstands zwischen den Drehachsen der Haupträder.

Die vorliegende Aufgabe wird erfindungsgemäß ferner mittels einer landwirtschaftlichen Arbeitsmaschine mit den Merkmalen des Anspruchs 14 gelöst.

Die Arbeitsmaschine umfasst eine Karosserie sowie zwei Raupenlaufwerke, nämlich ein linkes und ein rechtes Raupenlaufwerk. Die Raupenlaufwerke sind jeweils über eine Anlenkstelle mit der Karosserie verbunden. Insbesondere können die Raupenlaufwerke an eine Vorderachse der Arbeitsmaschine angeschlossen sein. Die Arbeitsmaschine ist dadurch gekennzeichnet, dass mindestens eines der Raupenlaufwerke, vorzugsweise beide Raupenlaufwerke, von einem erfindungsgemäßen Raupenlaufwerk gemäß der vorliegenden Anmeldung gebildet ist bzw. sind. Die sich hierdurch ergebenden Vorteile sind vorstehend bereits dargelegt.

Die Erfindung ist nachstehend anhand eines Ausführungsbeispiels, das in den Figuren dargestellt ist, näher erläutert. Es zeigt:
- Fig. 1:: Eine schematische Seitenansicht einer landwirtschaftlichen Arbeitsmaschine, die mit zwei Raupenlaufwerken ausgestattet ist,
- Fig. 2:: Ein Querschnitt durch ein Raupenlaufwerk,
- Fig. 3:: Eine Prinzipdarstellung eines ersten erfindungsgemäßen Raupenlaufwerks,
- Fig. 4:: Eine Prinzipdarstellung eines zweiten erfindungsgemäßen Raupenlaufwerks,
- Fig. 5:: Eine Prinzipdarstellung eines dritten erfindungsgemäßen Raupenlaufwerks.

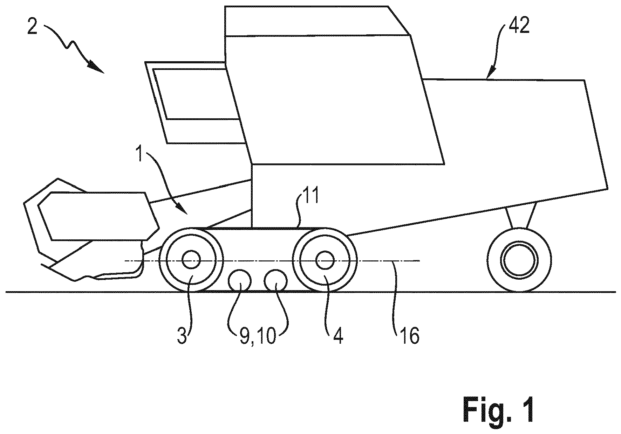

In **Figur 1** ist eine landwirtschaftliche Arbeitsmaschine **2** in Form eines selbstfahrenden Mähdreschers dargestellt, dessen Karosserie **42** mit zwei Raupenlaufwerken **1** zusammenwirkt. Die Raupenlaufwerke **1** sind hier an eine Vorderachse der Arbeitsmaschine **2** angeschlossen. Das Raupenlaufwerk 1 verfügt über ein vorderes Hauptrad **3,** ein hinteres Hauptrad **4** sowie zwei Stützräder **9, 10.** Ferner umfasst das Raupenlaufwerk **1** einen Laufgurt **11,** der die beiden Haupträder **3, 4** umspannt. Die Haupträder **3, 4** sind entlang einer Längsachse **16** des Raupenlaufwerks **1** betrachtet einander gegenüberliegend angeordnet. Die Stützräder **9, 10** sind in einem Zwischenbereich zwischen den Haupträdern **3, 4** angeordnet. Insgesamt findet ein Abtrag von Kräften, die von der Arbeitsmaschine **2** in das Raupenlaufwerk **1** abgeleitet werden, sowohl über die Haupträder **3, 4** als auch über die Stützräder **9, 10** in einen Untergrund statt.

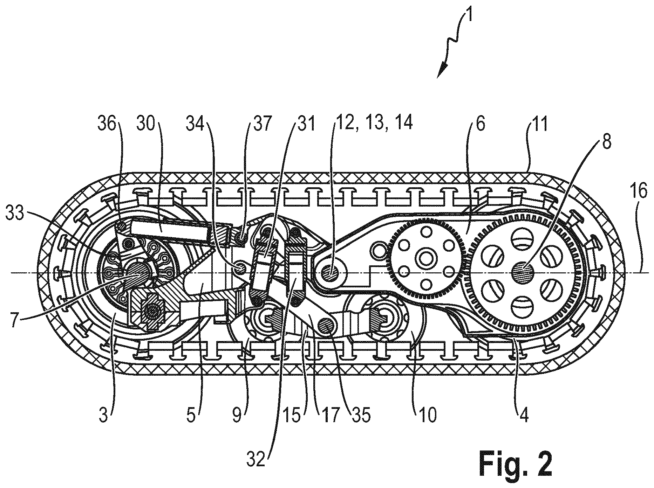

Die Konstruktion eines erfindungsgemäßen Raupenlaufwerks **1** ist in seinen Grundzügen gleich zu anderen Raupenlaufwerken. Ein solches ist beispielhaft in **Figur 2** dargestellt. Das dortige Raupenlaufwerk **1** verfügt über einen vorderen Hauptrahmen **5** und einen hinteren Hauptrahmen **6.** Die beiden Hauptrahmen **5, 6** sind an einer mittigen Anlenkstelle **12** des Raupenlaufwerks **1** unter Ausbildung einer Schwenkachse **14** in relativ zueinander verschwenkbarer Weise miteinander verbunden. In dem gezeigten Beispiel fällt die Schwenkachse **14** mit einer an der Anlenkstelle **12** ausgebildeten Maschinenachse **13** zusammen, um die das Raupenlaufwerk **1** als Ganzes um eine jeweilige Achse der Arbeitsmaschine **2** verschwenkbar gelagert ist. Die Maschinenachse **13** und die Schwenkachse **14** sind horizontal sowie senkrecht zu einer Gurtebene orientiert, die von dem Laufgurt **11** aufgespannt wird. In **Figur 2** ist die Gurtebene von der Zeichnungsebene gebildet bzw. zu dieser parallel. Ferner ist die Schwenkachse **14** bezogen auf eine entlang der Längsachse **16** des Raupenlaufwerks **1** gemessene Länge des Raupenlaufwerks **1** mittig angeordnet, sodass eine vertikale Mittelebene **29,** die ebenfalls senkrecht zu der Gurtebene des Laufgurts **11** orientiert ist und die Schwenkachse **14** beinhaltet, das Raupenlaufwerk **1** in zwei zumindest im Wesentlichen gleich große Abschnitte teilt, nämlich einen vorderen Abschnitt und einen hinteren Abschnitt. Der vordere Abschnitt beinhaltet den vorderen Hauptrahmen **5** und das vordere Hauptrad **3,** während der hintere Abschnitt den hinteren Rahmen **6** und das hintere Hauptrad **4** umfasst. Ferner ist bei Vorliegen des Raupenlaufwerks **1** in einer Mittellage, die in **Figur 2** veranschaulicht ist, die Schwenkachse **14** in vertikale Richtung betrachtet, das heißt bezogen auf eine Höhe des Raupenlaufwerks **1,** mittig angeordnet, sodass ein vertikal gemessener Abstand der Schwenkachse **14** von einem unteren Abschnitt **39** des Laufgurts **11** genauso groß ist wie ein vertikal gemessener Abstand der Schwenkachse **14** von einem oberen Abschnitt **38** des Laufgurts **11.** Hierdurch bedingt bewirken infolge einer Gurtspannung des Laufgurts **11** in dem Laufgurt **11** herrschende Kräfte kein Drehmoment um die Schwenkachse **14,** sofern sich letztere in ihrer in **Figur 2** dargestellten Nulllage befindet, die die Schwenkachse **14** bei Vorliegen des Raupenlaufwerks **1** in dessen Mittellage einnimmt.

An den vorderen Hauptrahmen **5** ist eine Stützradschwinge **17** unter Ausbildung eines Gelenks **34** angelenkt. An einem dem Gelenk **34** gegenüberliegenden Ende der Stützradschwinge **17** ist letztere - ebenfalls unter Ausbildung eines Gelenks **35** - mit einem Stützrahmen **15** verbunden. An diesem Stützrahmen **15** sind die beiden Stützräder **9, 10** jeweils drehbeweglich gelagert.

In dem gezeigten Beispiel ist das vordere Hauptrad **3** lediglich mittelbar an dem vorderen Hauptrahmen **5** gelagert. Dies erfolgt hier derart, dass das vordere Hauptrad **3** an einem Schwenkarm **33** gelagert ist, der wiederum gelenkig an dem vorderen Hauptrahmen **5** gelagert ist. Auf diese Weise kann ein Abstand der Drehachse **7** des vorderen Hauptrades **3** von der Schwenkachse **14** mittels Verschwenkens des Schwenkarms **33** relativ zu dem vorderen Hauptrahmen **5** verändert werden. Dies wird dazu genutzt, die Gurtspannung des Laufgurts **11** ein- bzw. nachzustellen. Um dies zu erreichen, umfasst das gezeigte Raupenlaufwerk **1** einen von einer Kolben-Zylinder-Einheit gebildeten Bandspannzylinder **30,** der mit seinem ersten Ende **36** an dem Schwenkarm **33** und mit seinem zweiten Ende **37** an dem vorderen Hauptrahmen **5** gelagert ist. Mittels einer Veränderung der Auslenkung des Bandspannzylinders **30** kann der Schwenkarm **33** relativ zu dem Hauptrahmen **5** verschwenkt werden, wodurch in der beschriebenen Weise die Drehachse **7** horizontal verlagert wird und sich dadurch ihr horizontal gemessener Abstand von der Drehachse **8** des hinteren Hauptrads **4** verändert. Entsprechend wird mittels einer solchen Bewegung die Gurtspannung des Laufgurts **11** verändert.

Das gezeigte Raupenlaufwerk **1** umfasst ferner zwei weitere Kolben-Zylinder-Einheiten **31, 32,** wobei die erstgenannte den vorderen Hauptrahmen **5** mit dem hinteren Hauptrahmen **6** und die zweitgenannte die Stützradschwinge **17** mit dem vorderen Hauptrahmen **5** koppeln. In Zusammenwirkung sind die Kolben-Zylinder-Einheiten **31, 32** dazu vorgesehen und eingerichtet, eine Verteilung der auf das Raupenlaufwerk **1** wirkenden Kräfte auf die Haupträder **3, 4** und die Stützräder **9, 10** zu bewirken. Die Aufgabe besteht in aller Regel darin, die Kräfte möglichst gleichmäßig über die Haupträder **3, 4,** und die Stützräder **9, 10** in den Untergrund abzuleiten. Hierzu können Druckräume der beiden Kolben-Zylinder-Einheiten **31, 32** strömungstechnisch miteinander gekoppelt sein, sodass die Verdrängung eines hydraulischen Fluids aus einem Druckraum der einen Kolben-Zylinder-Einheit **31, 32** zu einem entsprechenden Zufluss des Fluids in einen Druckraum der jeweils anderen Kolben-Zylinder-Einheit **31, 32** zur Folge hat. Hierdurch werden die Komponenten vorderer Hauptrahmen **5,** hinterer Hauptrahmen **6** und Stützradschwinge **17** bzw. Stützrahmen **15** kinematisch miteinander gekoppelt, um die genannte Kraftverteilung zu bewirken und insbesondere die Räder **3, 4, 9, 10** durchgehend in Kontakt mit dem Untergrund zu halten. Diese soll insbesondere auch dann erhalten bleiben, wenn die Räder **3, 4, 9, 10** bei Überfahren eines Hindernisses verschiedentlich angehoben werden.

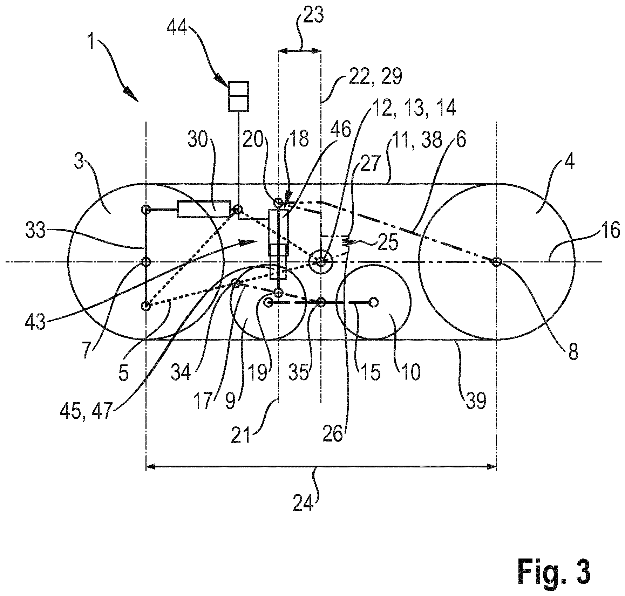

Eine erste Variante eines erfindungsgemäßen Raupenlaufwerks **1** ist in **Figur 3** veranschaulicht. Es unterscheidet sich von dem bekannten Raupenlaufwerk **1** insbesondere dadurch, dass es eine Dämpfungseinrichtung **43** umfasst, die eine Kolben-Zylinder-Einheit **18** sowie eine erste Druckeinrichtung **44** und eine zweite Druckeinrichtung **45** umfasst.

Die Kolben-Zylinder-Einheit **18,** die zum Einsatz kommt, koppelt die Stützradschwinge **17** mit dem hinteren Hauptrahmen **6.** Entsprechend ist ein Schwingenende **19** der Kolben-Zylinder-Einheit **18** gelenkig mit der Stützradschwinge **17** verbunden, während ein Rahmenende **20** der Kolben-Zylinder-Einheit **18** gelenkig mit dem hinteren Hauptrahmen **6** verbunden ist. Auf diese Weise wirkt die Kolben-Zylinder-Einheit **18** mechanisch als Pendelstab, der lediglich Normalkräfte übertragen kann, jedoch keine Übertragung von Querkräften und Drehmomenten zwischen der Stützradschwinge **17** und dem hinteren Hauptrahmen **6** ermöglicht. Die Kolben-Zylinder-Einheit **18** führt dazu, dass der vordere Hauptrahmen **5,** die Stützradschwinge **17** und der hintere Hauptrahmen **6** kinematisch miteinander gekoppelt sind. Auf diese Weise wird allein durch die Kolben-Zylinder-Einheit **18** erreicht, dass bei einer Anhebung eines der Räder **3, 4, 9, 10** die verbleibenden Räder **3, 4, 9, 10** in Kontakt mit dem Untergrund bleiben und entsprechend weiterhin ein Kraftabtrag über diese Räder **3, 4, 9, 10** in den Untergrund erfolgt. Dies ist anhand zweier Beispiele in der vorstehenden Beschreibung bereits erläutert worden.

Im Unterschied zu dem Raupenlaufwerk **1** gemäß Figur 2 ist es demzufolge nicht erforderlich, zwei separate Kolben-Zylinder-Einheiten **31, 32** zu verbauen, um die Stützradschwinge **17** sowie den vorderen Hauptrahmen **5** und den hinteren Hauptrahmen **6** kinematisch miteinander zu koppeln. Entsprechend ist das erfindungsgemäße Raupenlaufwerk **1** deutlich vereinfacht, ohne dass es zu einer Einschränkung der Funktionalität kommt. In besonders vorteilhafter Weise ist das Raupenlaufwerk **1** gemäß **Figur 3** frei von sonstigen Koppelgliedern oder Kolben-Zylinder-Einheiten, die beispielsweise die Stützradschwinge **17** mit dem vorderen Hauptrahmen **5** oder die beiden Hauptrahmen **5, 6** miteinander koppeln. Gegenüber dem Raupenlaufwerk 1 gemäß Figur 2 ist das erfindungsgemäße Raupenlaufwerk **1** gemäß Figur 3 entsprechend besonders einfach konstruiert, ohne hinsichtlich seiner Funktionalität nachteilig zu sein.

In dem gezeigten Beispiel ist die Kolben-Zylinder-Einheit **18** zumindest im Wesentlichen vertikal orientiert, sodass eine das Schwingenende **19** und das Rahmenende **20** verbindende Gliedachse **21** zumindest im Wesentlichen parallel zu einer Vertikalen **22** orientiert ist. Dies ergibt sich besonders gut anhand von **Figur 3**. Ferner findet sich die Kolben-Zylinder-Einheit **18** vollständig auf einer Seite der Schwenkachse **14,** wobei sie sich in dem gezeigten Beispiel in dem vorderen Abschnitt des Raupenlaufwerks **1** diesseits der Mittelebene **29** befindet. Ferner ist die Kolben-Zylinder-Einheit **18** derart angeordnet, dass sie sich in einem horizontal gemessenen Abstand **23** von der Schwenkachse **14** befindet, der in etwa einem Achtel eines ebenfalls horizontal gemessenen Radabstands **24** zwischen den Drehachsen **7, 8** der beiden Haupträder **3, 4** entspricht. Bei dieser Anordnung wird zumindest bei Vorliegen des Raupenlaufwerks **1** in seiner in **Figur 3** gezeigten Mittellage eine an der Anlenkstelle **12** an das Raupenlaufwerk **1** übertragende Kraft zu jeweils einem Viertel über die beiden Haupträder **3, 4** und die beiden Stützräder **9, 10** in den Untergrund abgeleitet. Ferner ist in dem gezeigten Beispiel das Schwingenende **19** der Kolben-Zylinder-Einheit **18** in etwa mittig an der Stützradschwinge **17** angeordnet, sodass ein horizontal gemessener Abstand des Schwingenendes **19** von den beiden Gelenken **34, 35** gleich groß ist. Hierdurch wird bewirkt, dass eine über die Kolben-Zylinder-Einheit **18** auf die Stützradschwinge **17** übertragene vertikale Kraft in etwa hälftig auf den vorderen Hauptrahmen **5** und hälftig auf den Stützrahmen **15** abgeleitet wird.

Die Kolben-Zylinder-Einheit **18** ist in dem gezeigten Beispiel doppelwirkend ausgebildet und umfasst entsprechend einen zylinderseitigen Hauptarbeitsraum **46** und einen kolbenseitigen Nebenarbeitsraum **47.** Ferner ist die Dämpfungseinrichtung **43** derart ausgebildet, dass die erste Druckeinrichtung **44** dem Hauptarbeitsraum **46** und die zweite Druckeinrichtung **45** dem Nebenarbeitsraum **47** zugeordnet sind. Die beiden Druckeinrichtungen **44, 45** sind hier jeweils von passiven Gasspeichern gebildet, die über ein komprimierbares Gasvolumen verfügen. Die Gasvolumina sind mittels Membranen von einem jeweiligen Hydraulikfluid getrennt, das sich in den Arbeitsräumen **46, 47** der Kolben-Zylinder-Einheit **18** befindet und über Leitungen mit den Druckeinrichtungen **44, 45** ausgetauscht wird. In dem gezeigten Beispiel ist die zweite Druckeinrichtung **45** in die Kolben-Zylinder-Einheit **18** integriert, wobei ein Gasvolumen der zweiten Druckeinrichtung **45** direkt in dem Nebenarbeitsraum **47** angeordnet ist. Die erste Druckeinrichtung **44** ist demgegenüber mittels einer in **Figur 3** schematisch dargestellten Leitung strömungstechnisch mit dem Hauptarbeitsraum **46** verbunden. Die Druckeinrichtungen **44, 45** ermöglichen eine Dämpfungsfunktion, die die Kolben-Zylinder-Einheit **18** erfüllt. Auf diese Weise werden stoßartige Belastungen, die auf die Räder **3, 4, 9, 10** wirken, beispielsweise infolge der Überfahrt eines Hindernisses, gedämpft, um schlagartige Belastungen zu vermeiden.

In dem gezeigten Beispiel sind der vordere Hauptrahmen **5** und der hintere Hauptrahmen **6** zusätzlich mittels einer Feder **25** direkt miteinander gekoppelt. Dieses ist an einem ersten Ende **26** mit dem vorderen Hauptrahmen **5** und mit einem zweiten Ende **27** mit dem hinteren Hauptrahmen **6** verbunden, sodass mittels des Federelements **25** bewirkte Federkräfte einander entgegengesetzt unmittelbar auf den vorderen Hauptrahmen **5** und den hinteren Hauptrahmen **6** wirken. In dem gezeigten Beispiel ist das Federelement **25** passiv ausgebildet, sodass durch das Federelement **25** bewirkt Kräfte allein infolge einer Auslenkung (Streckung oder Stauchung) des Federelements **25** bedingt sind. Es ist denkbar, das Federelement 25 vorzuspannen, beispielsweise mit einer Druckkraft, sodass auch bei Vorliegen des Raupenlaufwerks 1 in seiner Mittellage entgegengesetzte Kräfte und entsprechende Drehmomente auf die beiden Hauptrahmen 5, 6 einwirken.

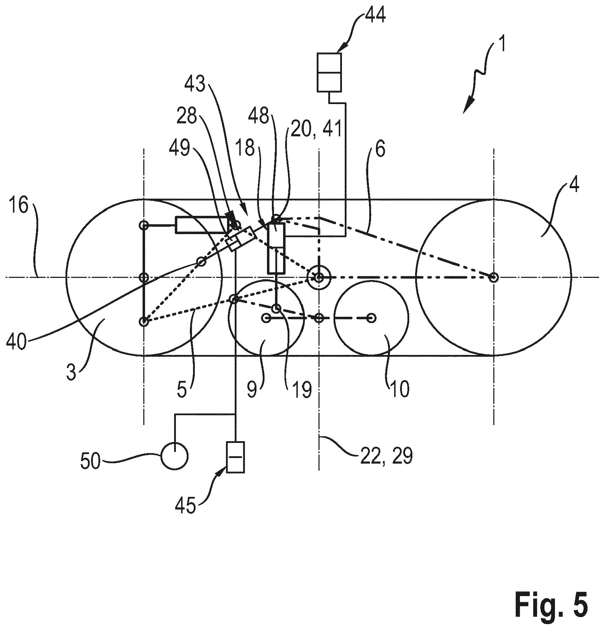

Das Federelement **25** hat die Funktion, das vorstehend beschriebene Aufstellen des Raupenlaufwerks **1** infolge einer vertikalen Verlagerung der Schwenkachse **14** ausgehend von ihrer in **Figur 5** dargestellten Nulllage nach oben zu reduzieren und hierdurch zu kontrollieren. Besagtes Aufstellen ist dadurch bedingt, dass ein vertikal gemessener Abstand der Schwenkachse **14** von einem oberen Abschnitt **38** des Laufgurts **11** infolge einer Verlagerung der Schwenkachse **14** vertikal nach oben verringert wird, während ein gleichartig gemessener Abstand der Schwenkachse **14** von einem unteren Abschnitt **39** des Laufgurts **11** vergrößert wird. Hierdurch bedingt wird infolge einer Gurtspannung des Laufgurts **11** ein Drehmoment um die Schwenkachse **14** auf den vorderen Hauptrahmen **5** und den hinteren Hauptrahmen **6** bewirkt, die eine weitergehende Bewegung der Schwenkachse **14** nach oben begünstigen. Umso weiter die Schwenkachse **14** angehoben wird, desto größer wird das Drehmoment, das diesen Effekt unterstützt, sodass sich eine selbst verstärkende Auslenkung der Schwenkachse **14** nach oben ergibt.

Das Federelement **25** dient dazu, eine infolge einer solchen Bewegung der beiden Hauptrahmen **5, 6** bedingte Verringerung einer Entfernung zwischen den beiden Enden **26, 27** des Federelements **25** entgegenzuwirken. Dies erfolgt in dem gezeigten Beispiel derart, dass das Federelement **25** komprimiert wird und entsprechend ihrer Federkonstante eine Gegendruckkraft aufbaut. Hierdurch wird einer weiteren Bewegung der beiden Enden **26, 27** des Federelements **25** entgegenwirkt, wodurch ein dem Aufstellen des Raupenlaufwerks 1 entgegenwirkendes Drehmoment auf die beiden Hauptrahmen **5, 6** aufgebracht wird.

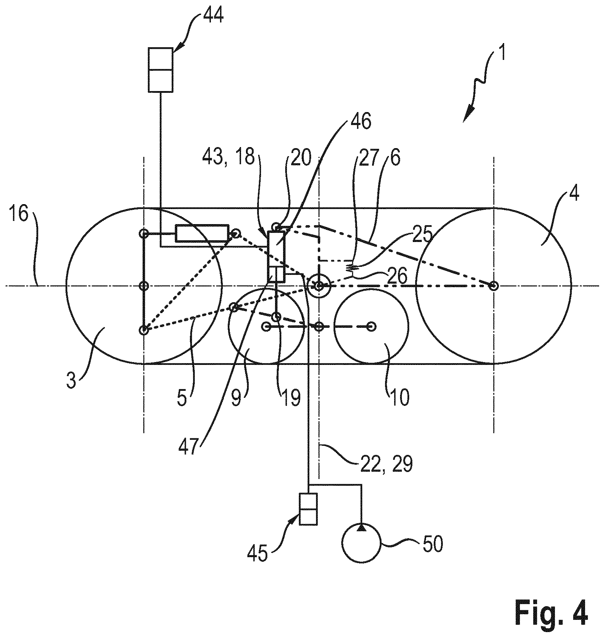

In einer weiteren Variante eines erfindungsgemäßen Raupenlaufwerks 1, die in **Figur 4** dargestellt ist, ist die Dämpfungseinrichtung **43** ebenfalls mit einer Kolben-Zylinder-Einheit **18** sowie zwei Druckeinrichtungen **44, 45** ausgestattet. Im Unterschied zu dem in **Figur** 3 gezeigten Beispiel ist die zweite Druckeinrichtung **45,** die dem Nebenarbeitsraum **47** der Kolben-Zylinder-Einheit **18** zugeordnet ist, nicht in die Kolben-Zylinder-Einheit **18** integriert. Ferner ist die zweite Druckeinrichtung **45** in dem gezeigten Beispiel an eine Druckquelle **50** angeschlossen. Auf diese Weise wirkt die zweite Druckeinrichtung **45** im Sinne der vorliegenden Anmeldung als aktive Druckeinrichtung. Die Druckquelle **50** ist mittels einer Leitung derart angebunden, dass ein mittels der Druckquelle **50** bereitgestellter hydraulischer Druck auf den Nebenarbeitsraum **47** der Kolben-Zylinder-Einheit **18** wirkt. Mithin ist die Druckquelle **50** dazu geeignet, einen Kolben der Kolben-Zylinder-Einheit **18** auszufahren und hierbei ein Volumen des Nebenarbeitsraums **47** zu vergrößern, während ein Volumen des Hauptarbeitsraums **46** verkleinert wird.

Hierdurch kann erreicht werden, dass der Druck in dem Hauptarbeitsraum **46** künstlich innerhalb eines vorgegebenen Bereichs gehalten wird. Dies kann beispielsweise von Vorteil sein, wenn eine auf das Raupenlaufwerk **1** einwirkende Kraft von so geringem Betrag ist, dass der Druck in dem Hauptarbeitsraum **46** außerhalb eines vorteilhaften Bereichs liegt. Insbesondere wird versucht, die Kolben-Zylinder-Einheit **18** in einem vorteilhaften Bereich ihrer Kennlinie zu halten, um die dämpfenden Eigenschaften der Kolben-Zylinder-Einheit **18** bestmöglich zu nutzen. Mittels des Aufbringens eines Drucks auf den Nebenarbeitsraum **47** kann der Druck in dem Hauptarbeitsraum **46** derart geregelt werden, dass er stets innerhalb eines vordefinierten, vorteilhaften Bereichs liegt. Die Dämpfungscharakteristik der Kolben-Zylinder-Einheit **18** kann dadurch unabhängig von einer Belastung des Raupenlaufwerks **1** in einem günstigen Bereich ihrer Kennlinie gehalten werden.

In einem weiteren Ausführungsbeispiel, das in **Figur 5** dargestellt ist, verfügt die Dämpfungseinrichtung **43** über eine zweite Kolben-Zylinder-Einheit **28,** deren erstes Ende **40** mit dem vorderen Hauptrahmen **5** und deren zweites Ende **41** mit dem hinteren Hauptrahmen **6** zusammenwirken. Die zweite Kolben-Zylinder-Einheit **28** ist mit einer hydraulischen Druckquelle **50** verbunden, wobei mittels der Druckquelle **50** ein Arbeitsraum **49** der zweiten Kolben-Zylinder-Einheit **28** mit hydraulischem Druck beaufschlagbar ist. Da der Arbeitsraum **49** hier kolbenseitig angeordnet ist, wird ein Kolben der zweiten Kolben-Zylinder-Einheit **28** infolge der Beaufschlagung des Arbeitsraums **49** mit hydraulischem Druk in einen zugeordneten Zylinder eingefahren wird. Dies führt zu einer Verkürzung der zweiten Kolben-Zylinder-Einheit **28** und mithin zu einer Bewegung der beiden Enden **40, 41** der Kolben-Zylinder-Einheit **28** aufeinander zu. Zumindest bei Vorliegen des Raupenlaufwerks **1** in einer Mittellage, wie sie in **Figur 5** dargestellt ist, ist eine solche Bewegung gleichbedeutend damit, dass die beiden Haupträder **3, 4** angehoben und dadurch entlastet werden, während die beiden Stützräder **9,10** einen höheren Anteil zum Abtrag der auf das Raupenlaufwerk **1** einwirkenden Kräfte beitragen. Auf diese Weise ist es möglich, gezielt die über die beiden Haupträder **3, 4** in den Untergrund abgeleitet Kräfte zu reduzieren, was beispielsweise bei einem Wendemanöver der Arbeitsmaschine **2** im Bereich eines Vorgewendes oder bei einer Straßenfahrt jeweiligen Arbeitsmaschine **2** vorteilhaft sein kann.

Ferner kann die zweite Kolben-Zylinder-Einheit **28** dazu genutzt werden, dem vorstehend beschriebenen Aufstellen des Raupenlaufwerks **1** aktiv entgegenzuwirken, indem der Arbeitsraum **49** mit Druck beaufschlagt wird. Ein zusätzliches Federelement **25,** wie es in den übrigen Ausführungsbeispielen gezeigt ist, kann demzufolge hier entfallen.

In dem gezeigten Beispiel ist die erste Druckeinrichtung **44,** die von einem passiven Gasspeicher gebildet ist und somit eine passive Druckeinrichtung im Sinne der vorliegenden Anmeldung darstellt, einem Arbeitsraum **48** der ersten Kolben-Zylinder-Einheit **18** zugeordnet, die hier einfachwirkend ausgebildet ist. Die zweite Druckeinrichtung **45** ist dem Arbeitsraum **49** der zweiten Kolben-Zylinder-Einheit **28** zugeordnet und ist an die beschriebene Druckquelle **50** angeschlossen. Die zweite Druckeinrichtung **45** bildet folglich im Sinne der vorliegenden Anmeldung eine aktive Druckeinrichtung, und zwar auch dann, wenn sie überdies einen passiven Gasspeicher umfasst, was bevorzugt ist.

### Bezugszeichenliste

- 1: Raupenlaufwerk
- 2: Arbeitsmaschine
- 3: vorderes Hauptrad
- 4: hinteres Hauptrad
- 5: vorderer Hauptrahmen
- 6: hinterer Hauptrahmen
- 7: Drehachse
- 8: Drehachse
- 9: Stützrad
- 10: Stützrad
- 11: Laufgurt
- 12: Anlenkstelle
- 13: Maschinenachse
- 14: Schwenkachse
- 15: Stützrahmen
- 16: Längsachse
- 17: Stützradschwinge
- 18: Kolben-Zylinder-Einheit
- 19: Schwingenende
- 20: Rahmenende
- 21: Gliedachse
- 22: Vertikale
- 23: Abstand
- 24: Radabstand
- 25: Federelement
- 26: Ende
- 27: Ende
- 28: Kolben-Zylinder-Einheit
- 29: Mittelebene
- 30: Bandspannzylinder
- 31: Kolben-Zylinder-Einheit
- 32: Kolben-Zylinder-Einheit
- 33: Schwenkarm
- 34: Gelenk
- 35: Gelenk
- 36: Ende
- 37: Ende
- 38: Abschnitt
- 39: Abschnitt
- 40: Ende
- 41: Ende
- 42: Karosserie
- 43: Dämpfungseinrichtung
- 44: erste Druckeinrichtung
- 45: zweite Druckeinrichtung
- 46: Hauptarbeitsraum
- 47: Nebenarbeitsraum
- 48: Arbeitsraum
- 49: Arbeitsraum
- 50: Druckquelle

## Patentansprüche

1. Raupenlaufwerk (1) für eine landwirtschaftliche Arbeitsmaschine (2), umfassend
- ein vorderes Hauptrad (3),
- ein in Längsrichtung des Raupenlaufwerks (1) betrachtet dem vorderen Hauptrad (3) gegenüberliegendes hinteres Hauptrad (4),
- einen dem vorderen Hauptrad (3) zugeordneten vorderen Hauptrahmen (5),
- einen dem hinteren Hauptrad (4) zugeordneten hinteren Hauptrahmen (6),
- mindestens zwei in einem Zwischenbereich zwischen den Haupträdern (3, 4) angeordnete Stützräder (9, 10),
- einen die Haupträder (3, 4) umspannenden Laufgurt (11),
- eine Anlenkstelle (12), mittels der das Raupenlaufwerk (1) unter Ausbildung einer Maschinenachse (13) schwenkbeweglich mit einer Karosserie (42) der Arbeitsmaschine (2) verbindbar ist,
wobei die beiden Hauptrahmen (5, 6) um eine gemeinsame Schwenkachse (14) schwenkbeweglich miteinander gekoppelt sind,
wobei die Stützräder (9, 10) an einem gemeinsamen Stützrahmen (15) bezogen auf eine Längsachse (16) des Raupenlaufwerks (1) hintereinander angeordnet sind,
wobei der Stützrahmen (15) mittels einer Stützradschwinge (17) schwenkbeweglich mit dem vorderen Hauptrahmen (5) verbunden ist,
**gekennzeichnet durch**
eine Dämpfungseinrichtung (43), die mindestens eine Kolben-Zylinder-Einheit (18) und mindestens eine hydraulisch wirkende Druckeinrichtung (44, 45) umfasst,
wobei die Kolben-Zylinder-Einheit (18) an einem Schwingenende (19) mit der Stützradschwinge (17) und an einem Rahmenende (20) mit dem hinteren Hauptrahmen (6) gekoppelt ist und hierdurch die Stützradschwinge (17) und den hinteren Hauptrahmen (6) miteinander koppelt.

2. Raupenlaufwerk (1) nach Anspruch 1, **dadurch gekennzeichnet, dass** die Dämpfungseinrichtung (43) mindestens, vorzugsweise genau, zwei hydraulisch wirkende Druckeinrichtungen (44, 45) aufweist, die mit derselben Kolben-Zylinder-Einheit (18) zusammenwirken, wobei die Kolben-Zylinder-Einheit (18) doppelwirkend ausgebildet ist, wobei die erste Druckeinrichtung (44) mit einem zylinderseitigen Hauptarbeitsraum (46) der Kolben-Zylinder-Einheit (18) und die zweite Druckeinrichtung (45) mit einem kolbenseitigen Nebenarbeitsraum (47) der Kolben-Zylinder-Einheit (18) wirkverbunden sind.

3. Raupenlaufwerk (1) nach Anspruch 2, **dadurch gekennzeichnet, dass** beide Druckeinrichtungen (44, 45) jeweils nach Art eines passiven Gasspeichers ausgebildet sind.

4. Raupenlaufwerk (1) nach Anspruch 3, **dadurch gekennzeichnet, dass** beide Druckeinrichtungen (44, 45) mit unterschiedlichen Drücken vorgespannt sind, wobei vorzugsweise die erste Druckeinrichtung (44) mit einem größeren Druck vorgespannt ist als die zweite Druckeinrichtung (45).

5. Raupenlaufwerk (1) nach einem der vorhergehenden Ansprüche, **dadurch gekennzeichnet, dass** die mindestens eine Druckeinrichtung (45) in die Kolben-Zylinder-Einheit (18) integriert ausgebildet ist, wobei vorzugsweise die Kolben-Zylinder-Einheit (18) einfachwirkend ausgebildet ist.

6. Raupenlaufwerk (1) nach einem der vorhergehenden Ansprüche, **dadurch gekennzeichnet, dass** die mindestens eine Druckeinrichtung (44, 45), vorzugsweise sämtliche Druckeinrichtungen (44, 45), einen Gasspeicher umfassen, wobei vorzugsweise die mindestens eine Druckeinrichtung (44, 45) eine hydraulischen Druckquelle (50) umfasst oder an eine hydraulische Druckquelle (50) angeschlossen ist, mittels der aktiv ein veränderlicher hydraulischer Druck auf den Hauptarbeitsraum (46) und/oder den Nebenarbeitsraum (47) der Kolben-Zylinder-Einheit (18) aufbringbar ist.

7. Raupenlaufwerk (1) nach einem der vorhergehenden Ansprüche, **gekennzeichnet durch** ein Federelement (25), dessen erstes Ende (26) an den vorderen Hauptrahmen (5) und dessen zweites Ende (27) an den hinteren Hauptrahmen (6) angeschlossen sind, wobei das Federelement (25) dazu vorgesehen und eingerichtet ist, die beiden Hauptrahmen (5, 6) zumindest dann mit einem gegenseitigen Drehmoment um die gemeinsame Schwenkachse (14) zu beaufschlagen, wenn sich die Schwenkachse (14) oberhalb einer Nulllage befindet, die das jeweilige Hauptrad (3, 4) bei Vorliegen des Raupenlaufwerks (1) in einer Mittellage einnimmt, in der das Raupenlaufwerk (1) auf einem ebenen Untergrund steht.

8. Raupenlaufwerk (1) nach einem der vorhergehenden Ansprüche, **dadurch gekennzeichnet, dass** die Dämpfungseinrichtung (43) eine zweite Kolben-Zylinder-Einheit (28) umfasst, deren erstes Ende (40) an den vorderen Hauptrahmen (5) und deren zweites Ende (41) an den hinteren Hauptrahmen (5) angeschlossen sind, wobei die zweite Kolben-Zylinder-Einheit (28) dazu vorgesehen und eingerichtet ist, die Hauptrahmen (5, 6) aktiv mit einem gegenseitigen Drehmoment um die gemeinsame Schwenkachse (14) zu beaufschlagen.

9. Raupenlaufwerk (1) nach den Ansprüchen 2 und 8, **dadurch gekennzeichnet, dass** die erste Druckeinrichtung (44) der ersten Kolben-Zylinder-Einheit (18) und die zweite Druckeinrichtung (45) der zweiten Kolben-Zylinder-Einheit (28) zugeordnet sind.

10. Raupenlaufwerk (1) nach Anspruch 9, **dadurch gekennzeichnet, dass** die erste Druckeinrichtung (44) nach Art eines passiven Gasspeichers ausgebildet ist, wobei die erste Druckeinrichtung (44) einem Arbeitsraum (48) der ersten Kolben-Zylinder-Einheit (18) zugeordnet ist, wobei vorzugsweise die erste Kolben-Zylinder-Einheit (18) einfachwirkend ausgebildet ist.

11. Raupenlaufwerk (1) nach Anspruch 9 oder 10, **dadurch gekennzeichnet, dass** die zweite Druckeinrichtung (45) eine hydraulischen Druckquelle (50) umfasst oder an eine hydraulische Druckquelle (50) angeschlossen ist, wobei mittels der hydraulischen Druckquelle (50) aktiv ein veränderlicher hydraulischer Druck auf einen Arbeitsraum (49) der zweiten Kolben-Zylinder-Einheit (28) aufbringbar ist, wobei vorzugsweise die zweite Kolben-Zylinder-Einheit (28) einfachwirkend ausgebildet ist.

12. Raupenlaufwerk (1) nach einem der vorhergehenden Ansprüche, **dadurch gekennzeichnet, dass** die Schwenkachse (14) der beiden Hauptrahmen (3, 4) mit der Maschinenachse (13) zusammenfällt.

13. Raupenlaufwerk (1) nach einem der vorhergehenden Ansprüche, **dadurch gekennzeichnet, dass** die Drehachsen (7, 8) der beiden Haupträder (3, 4) und die Schwenkachse (14) bei Vorliegen des Raupenlaufwerks (1) in einer Mittellage, in der das Raupenlaufwerk (1) auf einem ebenen Untergrund steht, zumindest im Wesentlichen auf einem gemeinsamen Höhenniveau liegen.

14. Landwirtschaftliche Arbeitsmaschine (2), umfassend
- eine Karosserie (42),
- ein linkes Raupenlaufwerk (1),
- ein rechtes Raupenlaufwerk (1),
wobei die Raupenlaufwerke (1) jeweils über eine Anlenkstelle (12) mit der Karosserie (42) verbunden sind,
**dadurch gekennzeichnet, dass**
mindestens eines der Raupenlaufwerke (1) gemäß einem der vorhergehenden Ansprüche ausgebildet ist.
